Europäisches Patentamt

European Patent Office

Office européen des brevets

(11) Publication number: **0 067 060**
**B1**

# EUROPEAN PATENT SPECIFICATION

(45) Date of publication of patent specification: **05.03.86**

(21) Application number: **82302919.4**

(22) Date of filing: **07.06.82**

(51) Int. Cl.⁴: **B 05 D 1/26,** B 05 D 7/14,
B 32 B 15/08, B 32 B 31/30

54 **Surface treated metal plate and method of producing it.**

(30) Priority: **09.06.81 JP 88536/81**

(43) Date of publication of application:
**15.12.82 Bulletin 82/50**

(45) Publication of the grant of the patent:
**05.03.86 Bulletin 86/10**

(84) Designated Contracting States:
**DE GB NL**

(56) References cited:
**DE-A-1 504 109**
**GB-A-1 566 422**
**US-A-3 547 682**

**JAPANESE PATENTS REPORT, vol. 74, no. 34,**
**Derwent Publications Ltd., London, G.B.**

(73) Proprietor: **TAIYO STEEL CO., LTD:**
**1-6 Nihonbashihoncho**
**Chuo-ku Tokyo (JP)**

(72) Inventor: **Ayusawa, Saburo**
**3-12-20 Shoan**
**Suginami-ku Tokyo (JP)**
Inventor: **Minami, Motoichi**
**14 Niban-cho**
**Chiyoda-ku Tokyo (JP)**
Inventor: **Kameya, Toru**
**3-14-D6 Ichikawaminami**
**Ichikawa-shi Chiba-ken (JP)**

(74) Representative: **Armitage, Ian Michael et al**
**MEWBURN ELLIS & CO. 2/3 Cursitor Street**
**London EC4A 1BQ (GB)**

Courier Press, Leamington Spa, England.

# Description

This invention relates to metal plates which are coated with a thermoplastic resin, for example to give anti-corrosion properties and improved appearance.

It has been known to provide a synthetic resin coating for a metal plate by coating a steel plate with a thermosetting acrylic resin paint, or by laminating a preformed resin film to a steel plate. Such treated plates are used in many fields, such as building, interior decoration of vehicles, construction of domestic electrical machinery and tools, furniture and other domestic products, particularly because of their attractive colour, appearance and anti-corrosion properties.

However, paints employ resins of relatively low molecular weight, and it is difficult to attain a high molecular weight by baking and curing after coating, and also the fluidity of the paint on the metal plate is usually inadequate, and the coating lacks durability.

On the other hand, in lamination-coating of steel panels, the preformed resin films are produced by extruding resins such as polyvinyl chloride, acrylic resins or fluoroplastics from high molecular weight stock originating in the processes used for their production at petrochemical plants. Thus the molecular weight of such films can be far higher than those obtained from paints. Consequently, the durability of the film on the metal plate is much longer; for example 10 to 20 years as compared with 3 to 5 years from paint coatings.

However, there are problems with such laminated panels.

(i) With very thin films it is difficult to achieve uniform lamination on the metal plate, and wrinkling can occur. For this reason the film thickness is not usually less than 50 μ.

(ii) The surface of the metal plate will have microscopic unevenesses, and this tends to produce gaps between the film and the metal plate, so that adhesion of the film can be insufficient.

(iii) Since the resin must be preformed a a film, the range of resins which can be used is restricted according to their film-forming ability.

US—A—3,323,965 and the related specification DE—A—1504109 discloses a process of the type indicated in the pre-characterising portion of claim 1. In this known process a metal strip is preheated (e.g. to about 193°C) and laminated to an extruded molten plastics film (e.g. polypropylene extruded from a die at 300°C). In order to avoid contact of a third body, the metal and plastics are urged together only by electrostatic force.

The present invention provides a method of producing a coated metal plate which comprises preheating the metal plate and directly extruding a thermoplastic resin at a higher temperature than the plate onto the heated surface; characterised in that the metal is preheated to a temperature at least 50°C below that of the extruded resin by passage around a heating roll, and thereafter passes through a nip between the heating roll and a cold roll; and the resin is extruded onto the surface of the metal plate remote from the heating roll adjacent the nip so that the coated plate passes through the nip; the coating being mechanically pressed against the plate.

Such a method can give a coated metal plate having an attractive appearance and also good adhesion between the coating and the plate and good anti-corrosion properties, as compared with painted and laminated steel plates. Since the resin is applied directly from the extrusion die in the molten state, without forming it into an independent film, the thickness of the film can be less than 50μ; preferably from 35μ down to 5μ. The actual thickness of the film used may be determined by the degree of durability required, and also by considerations of cost. The present invention enables the product to be much better matched to these requirements. Furthermore, although hard resins can be used to produce a self-supporting film, the film is easily broken and it is difficult to adhere under pressure to the metal plate. In the present invention such hard resins can be used, as they are coated while in the molten state. Moreover, since the step of forming an independent film is omitted, the cost of producing the coated metal is reduced.

The metal plates which can be coated in accordance with the present invention include steel, zinc-plated steel, zinc alloy-plated steel, lead-plated steel, lead alloy-plated steel, aluminium-plated steel, aluminium alloy-plated steel and stainless steel. As well as purely metal plate substrates, there can be used metal plates which have a surface treatment provided by a chemical layer of about 0.1—5μ. The object of the chemical treatment of the surface is to increase its anti-corrosion, anti-oxidation and adhesion properties. Such treatments may for example include zinc phosphate treatment, iron phosphate treatment, or electrolytic chromate treatment. Additionally or alternatively, the metal plate may have an adhesive layer applied to it. The adhesive layer is at least a few μ thickness, and its object is to increase the adhesion of the subsequently applied thermoplastic resin to the metal plate. Preferred adhesives are thermoplastic resin adhesives having functional groups, for example modified polyethylene, modified epoxy resin and modified vinyl resin. They have good adhesive properties both for metal and thermoplastic resins. They include for example modified polyolefin resins such as ethylene-vinyl acetate copolymer or acrylic acid copolymer in the case of polyolefin-coated steel.

Suitable thermoplastic resins used for coating the metal surface include for example polyolefins, acrylic resins, polyesters, polyamides, polyvinyl chloride, fluorocarbon resins, polycarbonates, styrene type resins, ABS resins, chlorinated polyethers and urethane resins. Polyolefins includes polymers or copolymers of ethylene, propylene, 1-butene or 1-pentene. Acrylic resins include polymers of copolymers of acrylic acid, methacrylic acid, acrylic acid ester, methacrylic acid ester or acrylamide. Polyesters include polyethylene terephthalate and oil-free polyesters. Polyamide resins include so-called nylon 66, nylon 6, nylon 610 and nylon 11. Polyvinyl chloride includes homopolymers and copolymers, for example with ethylene or vinyl acetate. Fluorocarbon resins include tetrafluorinated polyethylene, trifluorinated monochorinated polyethylene, hexafluorinated ethylene-propylene resin, polyvinyl fluoride and polyvinylidene fluoride. Mixtures of two or more resins can be used. The film may include conventional additives, for example anti-deterioration agents, modifiers and pigments. Cross-linking agents such as amino resins or epoxy resins can be added so long as fluidity of the coating is not lost.

The thermoplastic resin is selected according to the requirements of weatherproofing properties, durability to extremes of cold or heat, anti-scratch properties, anti-contamination properties, chemical durability, ease of processing in deep-drawing, and other objects in having a coated metal plate. For example, polyolefine is superior in its resistance to extremes of cold. Polyamide is superior in its abrasion-resistance. Acrylic resin is superior in its contamination-resistance and also chemical resistance. Fluorocarbon resin is superior in its weatherproof properties.

Resins can be coated forming a mono-layer or multi-layers of the same or different resins. In the case of multi-layer coatings, a multi-layer die can be used, optionally providing an adhesioin layer between thermoplastic layers.

For example, a multi-layer coated steel plate can be directly and continuously produced by extruding a molten thermoplastic resin as a lower layer, a molten adhesive resin as a middle layer, and another molten thermoplastic layer as an upper layer, the films being produced by a three-layer T-die onto a steel plate which has been precoated with an adhesive and has been preheated. Alternatively, a coated steel plate can be directly and continuously obtained by extruding a molten adhesive resin as a first layer, a molten thermoplastic resin as a second layer, and a molten adhesive resin as a third layer, and a molten thermoplastic resin as a fourth layer; all four films being produced from a four-layer T-die onto a preheated steel plate.

To give a more specific example, a zinc-plated steel plate or cold rolled steel plate can have a chemically treated surface layer on which is applied an adhesive coating and a coating of polyolefin on the adhesive layer. This has good cold-resistance and durability, and low friction with respect to snow, and thus is suitable for outdoor use in cold districts, for example in providing roofs or walls of buildings.

A steel plate having a fluorocarbon resin layer on a polyolefin layer with an adhesive layer in between has very good weatherproof properties.

A steel plate having a flame-restardant resin layer applied through an adhesive layer onto a foamed urethane resin layer which in turn is secured to the chemically treated surface of a cold rolled steel plate through an adhesive layer has good heat-insulation and flame-retardant properties, and is thus suitable for interior decoration panels.

In another example an adhesive layer is applied to a chemically treated cold rolled plate, a polyolefin layer is applied to the adhesion layer, an adhesion layer is coated onto the polyolefin layer, and a polycarbonate layer is coated onto the adhesive layer. This coated metal plate is suitable for domestic electrical appliances, because of its scratch-resistant properties.

The foregoing multi-layer coated surfaces can be produced using multi-layer T-die.

In coating an adhesive onto a metal base plate, spray coating or roll coating can be used when the adhesive is solvent-based. When the adhesive is of a powder type a fluidised immersion method, electrostatic spray method, electrostatic atomisation method, or flame-spraying method may be used. When the adhesive is in pellet form the multi-layer extrusion method may be used.

It is necessary to heat the metal base plate in advance of applying the molten resin. Without preheating the adhesion of the resin is inadequate, and hence for example the anti-corrosion property may be adversely affected. Higher preheating temperatures are preferred as this increases the fluidity of the resin, but the temperature should not be so high as to produce decomposition of the resin or adhesive, and moreover it is wasteful of energy. Preheating is at a temperature at least 50°C below the temperature of the molten resin. Usually the preheating temperature is in the range 50—250°C, preferably 50—170°C.

The invention will be more particularly described with reference to the accompanying drawings, wherein:

Fig. 1 is a diagrammatic representation of a simplified process for illustrating some (only) of the features of the invention; and

Fig. 2 is a diagrammatic representation of a process embodying the invention for coating by downward extrusion of resin into a nip between a metal plate and a cold roll.

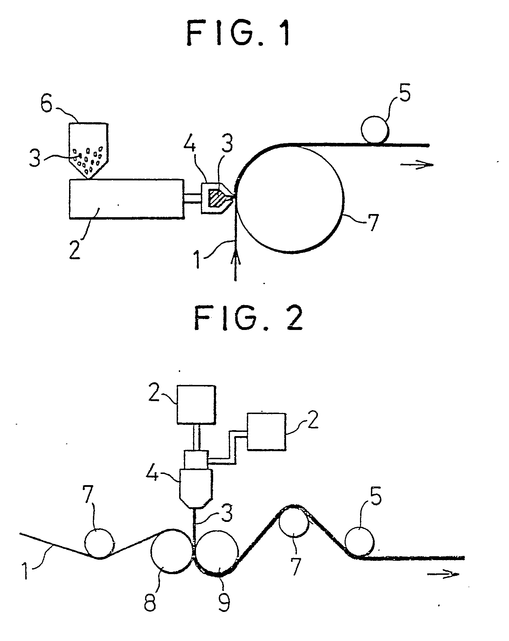

In the process shown in Fig. 2, a metal base plate 1 is passed around a heating roll 8 and then around a cold roll 9. A molten thermoplastic film is extruded from the die 4 downwardly onto the heated surface of the metal plate in the nip between the plate and the cold roll 9. The coated metal plate then passes around a guide roll 7 and under a press roll 5 to press down the surface coating. The resin is extruded in the molten state, but it should not only have fluidity but also some tackiness. It should be sufficiently molten such that if two such resins or a resin and metal plate are pressed together by hand they cannot be easily peeled apart. The diagram also illustrates the use of two extruders 2 so as to produce a two-layer extruded film. This process enables easy control of the film thickness and the surface finish. For example, it is easy to control the surface gloss and to add an embossed pattern on the surface.

The metal plate 1 coated at high temperature by molten resin 3 is subsequently cooled and rolled. Any suitable cooling method can be used, for example by passing through a cooling vessel or between cooling rolls.

The invention will be more particularly explained by the following Examples 1 to 9 and Comparative Examples 1 to 3. Examples 1 to 9 concern a simplified process as shown in Fig. 1 in which resin 3 from a hopper 6 was melted and mixed in an extruder 2, then extruded through a T-die 4 onto a preheated plate 1 as it passed around a guide roll 7. There was no cold roll forming a nip before the coated plate passed to a press roll 5. Thus the easy control of film thickness is not achieved, but the way of applying the film to the plate is as in the present invention.

### Examples 1 to 9

A metal base plate was prepared by chemically treating a zinc-plated steel plate of 0.4 mm thickness with zinc phosphate. The surface-treated metal plate was coated with resins, and was subsequently tested, giving the results shown in Table 1. In the case of polyethylene, the temperature of the extruded resin was about 250°C.

### Comparative Examples 1 to 3

A metal base plate which had not been previously heated was used in Comparative Example 1; a commercially obtained steel plate having a baked coloured acrylic paint coating was used in Comparative Example 2; and a commercially available polyvinyl chloride-laminated steel plate was used in Comparative-Example 3. They were tested in the same manner as Examples 1 to 9, and the results are also shown Table 1.

Further tests were done as follows.

(i) *Adhesion.* The coating layer was cut through to the metal plate, and its appearance was observed after peeling the coated layer at the rate of 50 mm/min. For coated layers of 50μ or less, the peeling was done after applying a tape to it.

(ii) *Corrosion resistance.* Degrees of corrosion were observed after spraying with 5% sodium chloride aqueous solution on test panels at 35°C for 10,000 hours.

(iii) *Weather resistance.* The condition of the surface was observed after leaving test panels in a weathermeter for 1000 hours.

(iv) *Appearance.* The surface appearance was observed and the results shown in the Table according to the following standard.

 ★ ... Excellent
 O ... Very Good
 △ ... Good
 X ... Bad

From the foregoing it will be seen that coated metal plates prepared according to the present invention have superior properties as compared with conventional coated metal plates. Moreover it is possible to apply a thin coating, by a simple method.

TABLE 1

| | Kind of resin | Thickness μ | Preheating temperature | Kind of adhesive | Appearance | Adhesion | Corrosion resistance | Weather resistance |
|---|---|---|---|---|---|---|---|---|
| Example 1 | Polyethylene | 200 | 170°C | Modified polyethylene | O | ★ | ★ | O |
| Example 2 | Polyethylene | 50 | 170°C | Modified polyethylene | O | ★ | ★ | O |
| Example 3 | Polyethylene | 30 | 170°C | Modified polyethylene | O | ★ | ★ | O |
| Example 4 | Polyethylene | 10 | 170°C | Modified polyethylene | O | ★ | O | O |
| Example 5 | Polypropylene | 50 | 170°C | Modified polyethylene | O | ★ | ★ | O |
| Example 6 | Polyvinyl chloride | 30 | 170°C | Modified epoxy resin | O | ★ | O | △ |
| Example 7 | Vinylidene fluoride | 30 | 170°C | Modified epoxy resin | O | ★ | ★ | ★ |
| Example 8 | Vinylidene fluoride | 10 | 170°C | Modified epoxy resin | O | ★ | ★ | ★ |
| Example 9 | Polyethylene | 30 | 50°C | Modified polyethylene | O | O | ★ | O |
| Comparative Example 1 | Polyethylene | 30 | Room temperature | Modified polyethylene | O | △ | △ | △ |
| Comparative Example 2 | Acrylic resin | 15 | — | — | O | △ | X | X |
| Comparative Example 3 | Polyvinyl Chloride | 200 | — | — | O | △ | △ | O |

## Claims

1. A method of producing a coated metal plate which comprises preheating the metal plate (1) and directly extrudling a thermoplastic resin (3) at a higher temperature than the plate onto the heated surface; characterised in that the metal is preheated to a temperature at least 50°C below that of the extruded resin by passage around a heating roll (8), and thereafter passes through a nip between the heating roll (8) and a cold roll (9); and the resin (3) is extruded onto the surface of the metal plate (1) remote from the heating roll (8) adjacent the nip so that the coated plate (1, 3) passes through the nip; the coating being mechanically pressed (9, 5) against the plate (1).

2. A method according to claim 1 wherein the metal plate (1) is preheated to a temperature substantially within the range 50—250°C.

3. A method according to claim 1 wherein the metal plate (1) is preheated to a temperature substantially within the range 50—170°C.

4. A method according to any preceding claim wherein the metal plate is steel, metal-plated steel or stainless steel.

5. A method according to any preceding claim wherein the metal plate has a chemically treated surface layer.

6. A method according to any one of the preceding claims wherein an adhesive layer is located between the thermoplastic resin and the metal.

7. A method according to claim 6 wherein the adhesive layer is extruded with the thermoplastic resin from a multi-layer die.

8. A method according to any one of the preceding claims wherein at least two thermoplastic resin layers are extruded onto the metal plate from a multi-layer die.

9. A method according to claim 8 wherein an adhesive layer is co-extruded between adjacent thermoplastic resin layers.

10. A method according to any preceding claim wherein the passage of the coated plate (1,3) through the nip (8, 9) is arranged to apply an embossed pattern to the coating of resin (3).

## Patentansprüche

1. Verfahren zur Herstellung eines beschichteten Metallblechs, bei dem das Metallblech (1) vorgewärmt und ein thermoplastisches Kunstharz (3) bei einer höheren Temperatur als das Blech unmittelbar auf die erhitzte Oberfläche extrudiert wird, dadurch gekennzeichnet, daß das Metall auf eine Temperatur vorgewärmt wird, die mindestens 50°C unter derjenigen des extrudierten Harzes liegt, indem es um eine erhitzte Walze (8) herumgeführt und sodann durch einen Spalt zwischen der Aufheizwalze (8) und einer kalten Walze (9) hindurchgeführt wird, und daß das Harz (3) neben dem Walzenspalt auf die von der Aufheizwalze (8) abliegende Oberfläche des Metallblechs (1) extrudiert wird, so daß das beschichtete Blech (1, 3) den Walzenspalt durchläuft, wobei die Beschichtung gegen das Blech (1) mechanisch angepreßt (9, 5) wird.

2. Verfahren nach Anspruch 1, wobei das Metallblech auf eine Temperatur im Bereich von 50 bis 250°C vorgewärmt wird.

3. Verfahren nach Anspruch 1, wobei das Metallblech auf eine Temperatur im Bereich 50 bis 170°C vorgewärmt wird.

4. Verfahren nach einem der vorhergehenden Ansprüche, wobei das Metallblech aus Stahl, metallbeschichtetem Stahl oder rostfreiem Stahl besteht.

5. Verfahren nach einem der vorhergehenden Ansprüche, wobei das Metallblech eine chemisch behandelte Oberflächenschicht aufweist.

6. Verfahren nach einem der vorhergehenden Ansprüche, wobei eine Klebstoffschicht zwischen dem thermoplastichen Kunstharz und dem Metall angeordnet ist.

7. Verfahren nach Anspruch 6, wobei die Klebstoffschicht zusammen mit dem thermoplastischen Kunstharz aus einer Mehrschichten-Matrize extrudiert wird.

8. Verfahren nach einem der vorhergehenden Ansprüche, wobei zumindest zwei Schichten aus thermoplastischem Kunstharz aus einer Mehrschichten-Matrize auf das Metallblech extrudiert werden.

9. Verfahren nach Anspruch 8, wobei eine Klebstoffschicht zwischen zwei benachbarten Schichten aus thermoplastischem Kunstharz gemeinsam extrudiert wird.

10. Verfahren nach einem der vorhergehenden Ansprüche, wobei der Durchlauf des beschichteten Blechs (1, 3) durch den Walzenspalt (8, 9) so ausgebildet ist, daß in die Beschichtung aus Harz (3) ein Muster geprägt wird.

## Revendications

1. Procédé de fabrication d'une bande métallique enduit qui consiste à préchauffer la bande métallique (1) et à extruder directement une résine thermoplastique (3) à une température supérieure à la bande sur la surface chauffée; caractérisé en ce que le métal est préchauffé à une température au moins de 50°C en dessous de celle de la résine extrudée par passage autour d'un rouleau chauffant (8) et ensuite passe à travers une emprise entre le rouleau chauffant (8) et un rouleau froid (9); et la résine (3) est extrudée sur la surface de la bande métallique (1) qui est éloignée du rouleau chauffant (8) à promimité de l'emprise afin que la plaque revêtue (1, 3) traverse l'emprise; le revêtement étant mécaniquement pressé (9, 5) contre la plaque (1).

2. Procédé selon la revendication 1, où la bande métallique (1) est préchauffée à une température sensiblement dans la gamme de 50—250°C.

3. Procédé selon la revendications 1, où la bande métallique (1) est préchauffée à une température sensiblement dans la gamme de 50—170°C.

4. Procédé selon l'une quelconque des revendications précédentes, où la bande métallique est de l'acier, de l'acier plaqué de métal ou de l'acier inoxydable.

5. Procédé selon l'une quelconque des revendications précédentes, où la bande métallique a une couche de surface traitée chimiquement.

6. Procédé selon l'une quelconque des revendications précédentes, où une couche adhésive est placée entre la résine thermoplastique et le métal.

7. Procédé selon la revendication 6, où la couche adhésive est extrudée avec la résine thermoplastique par une filière multicouche.

8. Procédé selon l'une quelconque des revendications précédentes, où au moins deux couches de résine thermoplastique sont extrudées sur la bande métallique par un filière multicouche.

9. Procédé selon la revendication 8, où une couche adhésive est coextrudée entre des couches adjacentes de résine thermoplastique.

10. Procédé selon l'une quelconque des revendications précédentes, où le passage de la bande enduite (1, 3) à travers l'emprise (8, 9) est agencé pour appliquer un motif gravé au revêtement de résine (3).

# FIG. 1

# FIG. 2